# EUROPEAN PATENT SPECIFICATION

(11) **EP 3 366 946 B1**
(45) Date of publication and mention of the grant of the patent: **28.08.2019**
(21) Application number: 18156800.7
(22) Date of filing: 14.02.2018
(51) Int. Cl.: F16F 15/03, B60K 5/12

(54) **POWERTRAIN MOUNT SYSTEM**
ANTRIEBSSTRANGHALTESYSTEM
SYSTÈME DE SUPPORT DE GROUPE PROPULSEUR

(30) Priority: 27.02.2017 GB 201703103
(43) Date of publication of application: 29.08.2018
(73) Proprietor: Ford Global Technologies, LLC, Dearborn, MI 48126 (US)
(72) Inventor: SYKES, Matt, Wickford, Essex SS12 9QB (GB); THOMPSON, Tom Robert George, Brentwood, Essex CM15 8BE (GB)
(74) Representative: Haseltine Lake Kempner LLP

(56) References cited:
- JP-A- 2004 092 832
- JP-A- 2004 092 833
- US-A- 4 869 474
- US-A- 5 275 388
- US-A1- 2005 023 092
- US-B2- 9 556 927
- LEMARQUAND G ED - INSTITUTE OF ELECTRICAL AND ELECTRONICS ENGINEERS: "LINEAR ACTUATOR FOR VIBRATION CONTROL", 1996 DIGESTS OF INTERMAG: IEEE INTERNATIONAL MAGNETICS CONFERENCE. SEATTLE, APR. 9 - 12, 1996; [DIGESTS OF INTERMAG: IEEE INTERNATIONAL MAGNETICS CONFERENCE], NEW YORK, IEEE, US, 9 April 1996 (1996-04-09), page BT/05, XP000769174, ISBN: 978-0-7803-3241-6

## Description

This disclosure relates to a powertrain mount system for a vehicle, and in particular, but not exclusively, relates to an electromagnetic suspension system that is adjustable in response to vehicle dynamics.

### Introduction

It is common for a vehicle to have a powertrain mount system that is configured to support a powertrain of the vehicle relative to the vehicle body. However, the design of the powertrain mount system is complex as it has many requirements to fulfil. For example, the powertrain mount system is required to locate and constrain the powertrain, isolate vibration from the powertrain, reduce road induced loads, meet durability requirements and be light weight.

It is common for a vehicle to have a plurality of brackets that are configured to support the powertrain relative to the vehicle body. In many applications, the brackets are fitted with rubber mounts that are designed to reduce the transmission of vibration from the powertrain to the vehicle body, and vice versa.

To maximise vibration absorption at idle and during wide open throttle events, it is desirable for the powertrain mount system to have a low stiffness/high displacement characteristic. However to minimise transient behaviour and wear to components during dynamic manoeuvres, such as cornering and gear changes, a high stiffness/short displacement characteristic is desired. As such, there is a trade-off, which leads to sub-optimal system behaviour and a system that cannot meet all requirements.

LEMARQUAND, Guy - INSTITUTE OF ELECTRICAL AND ELECTRONICS ENGINEERS: "LINEAR ACTUATOR FOR VIBRATION CONTROL", 1996 DIGESTS OF INTERMAG: IEEE INTERNATIONAL MAGNETICS CONFERENCE, SEATTLE, 9 April 1996, page BT/05, discloses a magnetic linear actuator for use as active engine support.

### Statements of Invention

According to an aspect of the present disclosure there is provided a powertrain mount system for a powertrain, e.g. a powertrain of a vehicle. The system comprises: an active magnetic bearing configured to support at least a portion of the powertrain relative to a body portion of the vehicle; and a controller configured to determine an operational state of at least one of the powertrain and the vehicle and adjust the operation of the active magnetic bearing depending on the operational state of at least one of the powertrain and the vehicle, wherein the controller is configured to increase the stiffness of the active magnetic bearing in response to at least one of an increase in the power output of the powertrain and the vehicle performing a manoeuvre, such as cornering or changing lanes.

The powertrain mount system may comprise one or more mounting brackets configured to be secured to a portion of the powertrain. The powertrain mount system may comprise one or more mounting brackets configured to be secured to a portion of a vehicle. The mounting bracket on the powertrain and the mounting bracket on the vehicle may cooperate to restrict the movement of the powertrain relative to the vehicle. There may be an operational clearance between the mounting bracket on the powertrain and the mounting bracket on the vehicle when the powertrain is installed to the vehicle. The active magnetic bearing may be configured to maintain the operational clearance between the mounting bracket on the powertrain and the mounting bracket on the vehicle.

The powertrain mount system may comprise one or more spacers, for example stops/bumpers, configured to prevent the mounting brackets on the powertrain and the mounting brackets on the vehicle from contacting each other. The spacers may be provided in the operation clearance in between the mounting brackets on the powertrain and the mounting brackets on the vehicle. The spacers may comprise a resilient material, e.g. rubber.

The active magnetic bearing may be configured to at least partially support the powertrain in one or more degrees of freedom.

The powertrain mount system may comprise a passive magnetic bearing. The passive magnetic bearing may be configured to at least partially support the powertrain in one or more degrees of freedom. The passive magnetic bearing may be configured to at least partially support the mass of the powertrain under static conditions, e.g. when the vehicle is parked. The passive magnetic bearing may be configured to at least partially support the mass of the powertrain under dynamic conditions, e.g. when the vehicle is performing a manoeuvre. The passive magnetic bearing may be configured to maintain a vertical operational clearance between the first and second brackets. The passive magnetic bearing and the active magnetic bearing may cooperate to at least partially, or fully, support the powertrain of the vehicle, e.g. during dynamic and/or static conditions. The passive magnetic bearing and the active magnetic bearing may cooperate to support the powertrain in one or more degree of freedom. For example, the passive magnetic bearing may be configured to contribute, e.g. significantly contribute, towards the bearing capacity of a combined active-passive magnetic bearing in one or more individual degrees of freedom, such as in a vertical or horizontal direction. The addition of a passive magnetic bearing to the active magnetic bearing may result in a reduction in the power required to operate the active magnetic bearing.

The powertrain mount system may comprise one or more sensors configured to determine the loading, e.g. dynamic loading, of the powertrain relative to the vehicle. For example, the powertrain mount system may comprise one or more load sensors and/or one or more accelerometers configured to determine the loading, e.g. dynamic loading, of the powertrain relative to the vehicle. The controller may be configured to adjust the stiffness of the active magnetic bearing in response to loading, e.g. dynamic loading, of the powertrain. For example, the controller may be configured to determine the vertical and/or horizontal movement and/or acceleration of one or more components of the powertrain as the vehicle operates.

The controller may be configured to maintain the stiffness of the active magnetic bearing under steady state loading of the powertrain. The controller may be configured to decrease the stiffness of the active magnetic bearing in response to a decrease in the power output of the powertrain.

The controller may be configured to adjust the stiffness of the active magnetic bearing in response to an operational frequency of the powertrain. For example, the controller may be configured to decrease the stiffness of the active magnetic bearing when the operational frequency of the powertrain is in the range of approximately 10 to 25 Hz.

A vehicle may be provided comprising one or more of the above mentioned powertrain mount systems.

According to another aspect of the present disclosure there is provided a method of controlling a powertrain mount system for a vehicle, the powertrain mount system comprising an active magnetic bearing configured to support at least a portion of the powertrain relative to the vehicle, and a controller configured to determine an operational state of at least one of the powertrain and the vehicle, the method comprising: determining the operational state of at least one of the powertrain and the vehicle; and adjusting the operation of the active magnetic bearing depending on the operational state of at least one of the powertrain and the vehicle, wherein the stiffness of the active magnetic bearing is increased in response to at least one of an increase in the power output of the powertrain and the vehicle performing a manoeuvre.

In the context of the present disclosure the term "powertrain" is understood to be the components of a vehicle that generate power and deliver it to a final drive component, for example a wheel, of a vehicle. The powertrain of a vehicle may include at least one of an engine, for example an internal combustion engine, a motor, for example an electric motor, a transmission, a drive shaft, and a differential. Further, where referred to in the present disclosure, the term "powertrain" is understood to exclude a final drive component, such as a wheel. In this manner, the powertrain mount system according to the present disclosure is differentiated from an electromagnetic suspension system of a vehicle, which is configured to support the vehicle body relative to a wheel of the vehicle. As such, the powertrain mount system according to the present disclosure is configured to support at least one of an engine, a motor, a transmission, a drive shaft, and a differential relative to the vehicle body.

The disclosure also provides software, such as a computer program or a computer program product for carrying out any of the methods described herein, and a computer readable medium having stored thereon a program for carrying out any of the methods described herein. A computer program embodying the disclosure may be stored on a computer-readable medium, or it could, for example, be in the form of a signal such as a downloadable data signal provided from an Internet website, or it could be in any other form.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figure 1 shows an arrangement for an electromagnetic powertrain mount;
Figure 2 shows a powertrain mount system for a vehicle; and
Figure 3 shows a flowchart depicting a method of controlling a powertrain mount system.

### Detailed Description

It is common for a powertrain mount system for a vehicle to comprise a physical connection between a vehicle powertrain and a body portion of the vehicle. To maximise vibration absorption, for example at engine idle speeds and/or during wide open throttle events, it is desirable for the powertrain mount system to have a low stiffness/high displacement characteristic. However, to optimize transient response and reduce wear to components during dynamic loading, a high stiffness/short displacement characteristic is desired. In some cases, a powertrain mount system may comprise a bracket that has a resilient member, such as a rubber block, configured to support the powertrain on the vehicle body. However, the use of such a powertrain mount system results in a compromise in the performance characteristics of the powertrain mount system, for example a compromise between vibration transmissivity and the stiffness of the powertrain mount system.

The present disclosure provides a powertrain mount system having an active magnetic bearing configured to support at least a portion of a powertrain relative to a vehicle body, which is beneficial as it removes the physical connection between the powertrain and the vehicle body, allowing the powertrain mount system to reduce vibration transmissivity whilst maintaining a high stiffness characteristic.

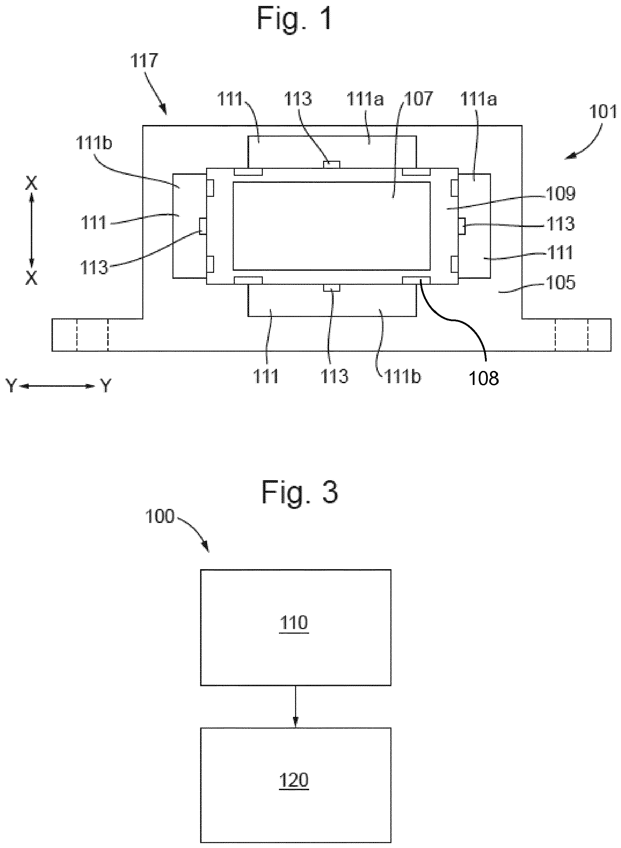

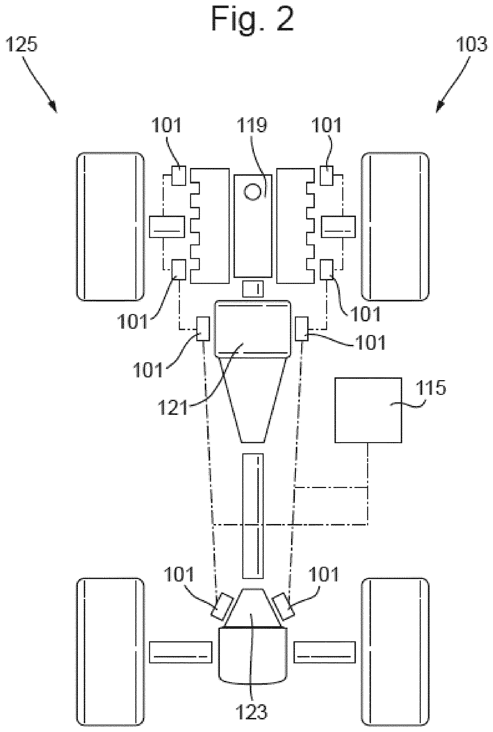

Figures 1 and 2 show a powertrain mount 101 and a powertrain mount system 103 respectively. In the arrangement shown in figure 1, the powertrain mount 101 is an engine mount comprising a first bracket 105, which may be attached to a body portion of the vehicle inside an engine bay of the vehicle, and a second bracket 107, which may be attached to a portion of the engine. However, the first and second brackets 105, 107 may be configured to attach to any appropriate portion of the vehicle body and the powertrain respectively. For example, the first bracket 105 may be configured to attach to a rear subframe of the vehicle, and the second bracket 107 may be configured to attach to a differential of the powertrain, the first and second brackets 105, 107 cooperating to limit the movement of the differential relative to the rear subframe.

In the arrangement shown in figure 1, the first bracket 105 comprises an opening 109 configured to receive the second bracket 107 so that there is an operational clearance between the first bracket 105 and the second bracket 107 when the second bracket 107 is received in the opening 109. The first bracket 105, the second bracket 107 and the opening 109 may each have any appropriate shape/form as required by the function the powertrain mount 101. For example, the operational clearance may extend completely around the second bracket 107, as shown in figure 1, or may extend only partially around the second bracket 107, in one or more other arrangements.

The powertrain mount 101 comprises at least one active magnetic bearing, e.g. at least one electromagnet 111, configured to interact with the second bracket 107. For example, the second bracket 107 may comprise a portion of ferrous material that is magnetically attracted towards the electromagnet 111 when it is energised. The force of magnetic attraction is dependent upon the magnetic flux density generated by the electromagnet 111. As such, where a larger current is supplied to the electromagnet 111, the force of magnetic attraction is greater, and where a smaller current is supplied to the electromagnet 111, the force of magnetic attraction is less.

As shown in figure 2, the electromagnets 111 may be provided in pairs. For example, each pair of electromagnets 111 may comprise a first electromagnet 111a arranged opposite a second electromagnet 111b. Since each of the first electromagnet 111a and the second electromagnet 111b act to attract the second bracket 107 in opposite directions, the first electromagnet 111a and the second electromagnet 111b may be controlled to balance the attractive forces so as to maintain the second bracket 107 substantially in between the first electromagnet 111a and the second electromagnet 111b.

In the arrangement shown in figure 1, the first bracket 105 comprises a plurality of electromagnets 111 that are disposed circumferentially around the opening 109 of the first bracket 105. For example, the first bracket 105 is provided with two pairs of opposing electromagnets 111a, 111b, each pair being configured to support the second bracket 107 relative to the first bracket 105 along a single axis. The first pair of electromagnets 111a, 111b is arranged to support the second bracket 107 along an axis indicated by the X arrow on figure 1, and the second pair of electromagnets 111a, 111b is arranged to support the second bracket 107 along an axis indicated by the Y arrow on figure 1. In this manner, the interaction between the electromagnet 111 of the first bracket 105 and the ferrous material of the second bracket 107 acts to support the first and second brackets 105, 107 relative to each other, so as to maintain the operational clearance between the first and second brackets 105, 107 when the electromagnets 111 are energised.

In one or more other arrangements, the electromagnets 111 may be arranged to support the second bracket 107 relative to the first bracket 105 in any appropriate number of degrees of freedom. Additionally or alternatively, the second bracket 107 may comprise one or more permanent magnets (not shown) configured to interact with the electromagnets 111 to at least partially support the second bracket 107 relative to the first bracket 105. The permanent magnets may be arranged so as to provide a magnetically attractive and/or repulsive force between the first and second brackets 105, 107, depending on the energised state of the electromagnets 111.

In one arrangement, the powertrain mount 101 may comprise a passive magnetic bearing, e.g. a permanent magnetic bearing, that may be used in combination with the above-described electromagnetic bearing. For example, the powertrain mount 101 may comprise a permanent magnetic bearing configured to at least partially support the mass of the powertrain under static conditions. In other words, the permanent magnetic bearing configured to maintain a vertical operational clearance between the first and second brackets 105, 107.

It is understood, however, that the particular arrangement of the active magnetic bearing is not limited to that shown in the appended figures. For example, in some arrangements, one or more electromagnets 111 may be provided on the second bracket 107, and/or one or more permanent magnets may be provided on the first bracket 105. The magnetic bearing may have any appropriate configuration that provides at least partial support of the powertrain relative to the vehicle body.

The powertrain mount system 103 further comprises one or more position sensors 113, for example one or more proximity sensors, configured to measure the spacing between the first and second brackets 105, 107. In the arrangement shown in figure 1, each of the position sensors 113 are provided proximate to respective electromagnets 111 in the first bracket 105. However, the position sensors 113 may be provided in any appropriate location so as to measure size of the operational clearance between the first and second brackets 105, 107. For example, the position sensors 113 may be provided on the second bracket 107. The position sensors 113 may be operatively connected to the electromagnets 111, for example via a controller 115, so as to form an active magnetic bearing 117. For example, the controller 115 may be configured to determine the position of the second bracket 107 within the opening 109 using one or more measurements taken from the position sensors 113. The controller 115 may be configured to adjust the operational state of the electromagnets 111 to control the flux density generated by the electromagnets 111. In this manner, the controller 115 is configured to adjust the attractive and/or repulsive forces of the powertrain mount 101 based on the operational clearance surrounding the second bracket 107.

In the arrangement shown in figure 1, the powertrain mount system 103 comprises one or more spacers 108, for example stops/bumpers, configured to prevent the first and second brackets 105, 107 from contacting each other. The spacers 108 may be advantageous to avoid contact between the first and second brackets 105, 107 under shock loading and/or when the electromagnets are powered down, e.g. when the vehicle is turned off.

Figure 2 shows one arrangement of the powertrain mount system 103 according to the present disclosure. In the arrangement shown in figure 2, the powertrain mount system 103 is configured to support an engine 119, a transmission 121 and a rear differential 123 of a vehicle 125 relative to a body of the vehicle 125. For clarity, the body of the vehicle 125 is not shown in figure 2, and it is understood that the vehicle may be any type of vehicle, such a car, a van, a truck, a marine vessel or an aircraft.

In the arrangement shown in figure 2, the powertrain mount system 103 comprises eight powertrain mounts 101 similar to the above described powertrain mount 101. The engine 119 is supported by four powertrain mounts 101, and the transmission 121 and the differential are each supported by two powertrain mounts 101. Each of the powertrain mounts 101 are operatively connected to the controller 115. The controller 115 may be an electronic control unit (ECU) of the vehicle 125, or may be a separate controller 115 configured to interface with the ECU of the vehicle. The ECU may comprise at least one of an electronic/engine control module, a powertrain control module (PCM), a transmission control module (TCM), a brake control module (BCM), a central control module (CCM), a central timing module (CTM), a body control module (BCM), a suspension control module (SCM), and any other appropriate control module. As such, the controller 115 may be configured to determine the operational state of the powertrain and/or the operational state of the vehicle itself. For example, the controller 115 may be configured to determine the power output from the engine 119, a selected gear of the transmission 121, and/or the operational state of the differential 123.

Additionally or alternatively, the controller 115 may be configured to determine the general dynamics of the vehicle 125, for example based on the operational state of at least one of a suspension system, a steering system and the roll/pitch/yaw of the vehicle 125, amongst other parameters. In this manner, the controller 115 is able to determine an operational state of at least one of the powertrain and the vehicle, and adjust the operation of at least one of the active magnetic bearings 117 of the powertrain mount system 103 depending an operational parameter of at least one of the powertrain and the vehicle.

Figure 3 shows an example control method 100 of the powertrain mount system 103. The method 100 comprises a step 110 of determining the operational state of at least one of the powertrain and the vehicle 125 and a step 120 of adjusting the operation of at least one active magnetic bearing 117 of the powertrain mount system 103 depending on the operational state of at least one of the powertrain and the vehicle 125.

Depending on the operation of the powertrain, the controller 115 is configured to adjust the stiffness of the active magnetic bearing in response to dynamic loading of the powertrain. For example, the controller 115 may be configured to determine the vertical and/or horizontal movement and/or acceleration of one or more components of the powertrain as the vehicle operates, and adjust the stiffness of at least one of the active magnetic bearings 117 in response to the operation of the powertrain. The powertrain mount system 103 according to the present disclosure is beneficial, therefore, as it is able to minimise the displacement of the powertrain under shock loading. According to the invention, where the vehicle 125 accelerates quickly and/or performs a manoeuvre, such as cornering and/or lane changing, the controller 115 is operable to increase the stiffness of one or more of the active magnetic bearings 117 in response to an increase in the power output of the powertrain and/or dynamic characteristics of the vehicle. Such an increase in stiffness acts to increase the efficiency of the power transferred from the engine to the final drive component, e.g. a wheel, of the vehicle, whilst maintaining a high degree of vibration isolation.

In another situation, where the engine 119 is operating at idle and/or the vehicle is operating at steady state, the controller 115 is operable to reduce the stiffness of one or more of the active magnetic bearings 117 in response to a low power output of the powertrain and/or steady state characteristics of the vehicle. Such a reduction in stiffness acts to reduce the transmission of vibration from the powertrain to the vehicle 125, which increases the ride quality and comfort level for an occupant of the vehicle 125. The powertrain mount system 103 according to present disclosure is advantageous as it able to adapt to the real-time operating conditions of the powertrain and/or the vehicle 125 to maximise the performance of the powertrain and/or the vehicle.

Further, by at least partially supporting the powertrain electromagnetically, the present disclosure allows for the removal of physical connections, e.g. rubber mounts, between the powertrain and the body of the vehicle 125, which can decrease the weight and package requirements for the powertrain and/or the vehicle 125.

It will be appreciated by those skilled in the art that although the disclosure has been described by way of example with reference to one or more arrangements, it is not limited to the disclosed arrangements and that alternative arrangements could be constructed without departing from the scope of the disclosure as defined by the appended claims.

## Claims

1. A powertrain mount system (103) for a vehicle powertrain, the system comprising:
an active magnetic bearing configured to support at least a portion of the powertrain relative to a body portion of a vehicle; and
a controller (115) configured to determine an operational state of at least one of the powertrain and the vehicle and adjust the operation of the active magnetic bearing depending on the operational state of at least one of the powertrain and the vehicle, **characterized in that**
the controller is configured to increase the stiffness of the active magnetic bearing in response to at least one of an increase in the power output of the powertrain and the vehicle performing a manoeuvre.

2. A powertrain mount system according to claim 1, wherein the controller is further configured to adjust the stiffness of the active magnetic bearing in response to at least one of dynamic loading of the powertrain and an operational frequency of the powertrain.

3. A powertrain mount system according to claim 1 or 2, wherein the controller is further configured to maintain the stiffness of the active magnetic bearing under steady state loading of the powertrain.

4. A powertrain mount system according to any of the preceding claims, wherein the controller is further configured to decrease the stiffness of the active magnetic bearing in response to a decrease in the power output of the powertrain.

5. A powertrain mount system according to any of the preceding claims, the powertrain mount system comprising a first bracket (105) attachable to the body portion of the vehicle and a second bracket (107) attachable to the powertrain, wherein the active magnetic bearing is configured to support the first and second brackets relative to each other.

6. A powertrain mount system according to claim 5, wherein the active magnetic bearing is configured to maintain an operational clearance between the first bracket and the second bracket when the active magnetic bearing is energised.

7. A powertrain mount system according to claim 6, the powertrain mount system comprising a sensor (113) configured to determine the size of the operational clearance.

8. A powertrain mount system according to claim 7, wherein the sensor is provided proximate to an electromagnet of the electromagnetic bearing.

9. A powertrain mount system according to claim 7 or 8, wherein the sensor is integral with at least one of the first bracket, the second bracket and the active magnetic bearing.

10. A powertrain mount system according to any of the preceding claims, the powertrain mount system further comprising a passive magnetic bearing configured to at least partially support the powertrain in one or more degrees of freedom.

11. A powertrain mount system according to claim 10, wherein the passive magnetic bearing and the active magnetic bearing cooperate to support the powertrain in one or more degrees of freedom.

12. A vehicle comprising at least one of the powertrain mount system of claims 1 to 11.

13. A method of controlling a powertrain mount system for a vehicle, the powertrain mount system comprising an active magnetic bearing configured to support at least a portion of the powertrain relative to the vehicle, and a controller configured to determine an operational state of at least one of the powertrain and the vehicle, the method comprising:
determining the operational state of at least one of the powertrain and the vehicle; and
adjusting the operation of the active magnetic bearing depending on the operational state of at least one of the powertrain and the vehicle, wherein the stiffness of the active magnetic bearing is increased in response to at least one of an increase in the power output of the powertrain and the vehicle performing a manoeuvre.

## Patentansprüche

1. Antriebsstrang-Montagesystem (103) für einen Fahrzeugantriebsstrang, wobei das System umfasst:
ein aktives Magnetlager, dafür ausgelegt, mindestens einen Teil des Antriebsstrangs im Verhältnis zu einem Karosserieteil des Fahrzeugs zu lagern; und
eine Steuerung (115), dafür ausgelegt, zumindest den Betriebszustand des Antriebsstrangs und/oder des Fahrzeugs zu bestimmen und das Betriebsverhalten des aktiven Magnetlagers abhängig vom Betriebszustand des Antriebsstrangs und/oder des Fahrzeugs einzustellen, **dadurch gekennzeichnet, dass**
die Steuerung dafür ausgelegt ist, die Steifheit des aktiven Magnetlagers als Reaktion darauf zu erhöhen, dass sich die Leistungsabgabe des Antriebsstrangs und/oder des manövrierenden Fahrzeugs erhöht.

2. Antriebsstrang-Montagesystem gemäß Anspruch 1, wobei die Steuerung ferner dafür ausgelegt ist, die Steifheit des aktiven Magnetlagers zumindest als Reaktion auf die dynamische Belastung des Antriebsstrangs und/oder der Betriebsfrequenz des Antriebsstrangs einzustellen.

3. Antriebsstrang-Montagesystem gemäß Anspruch 1 oder 2, wobei die Steuerung ferner dafür ausgelegt ist, die Steifheit des aktiven Magnetlagers bei einer stationären Belastung des Antriebsstrangs beizubehalten.

4. Antriebsstrang-Montagesystem gemäß einem der vorhergehenden Ansprüche, wobei die Steuerung ferner dafür ausgelegt ist, die Steifheit des aktiven Magnetlagers als Reaktion darauf zu senken, dass die Leistungsabgabe des Antriebsstrangs abnimmt.

5. Antriebsstrang-Montagesystem gemäß einem der vorhergehenden Ansprüche, wobei das Antriebsstrang-Montagesystem eine am Karosserieteil des Fahrzeugs anbringbare erste Halterung (105) und eine am Antriebsstrang anbringbare zweite Halterung (107) aufweist, wobei das aktive Magnetlager dafür ausgelegt ist, die erste und zweite Halterung gegeneinander abzustützen.

6. Antriebsstrang-Montagesystem gemäß Anspruch 5, wobei das aktive Magnetlager dafür ausgelegt ist, im Betrieb zwischen der ersten Halterung und der zweiten Halterung einen Zwischenraum aufrechtzuerhalten, wenn das aktive Magnetlager mit Strom versorgt wird.

7. Antriebsstrang-Montagesystem gemäß Anspruch 6, wobei das Antriebsstrang-Montagesystem einen Sensor (113) umfasst, der dafür ausgelegt ist, die Größe des im Betrieb erforderlichen Zwischenraums zu bestimmen.

8. Antriebsstrang-Montagesystem gemäß Anspruch 7, wobei der Sensor in der Nähe eines Elektromagneten des elektromagnetischen Lagers vorgesehen ist.

9. Antriebsstrang-Montagesystem gemäß Anspruch 7 oder 8, wobei der Sensor zumindest in die erste Halterung und/oder in die zweite Halterung und/oder das aktive Magnetlager eingebaut ist.

10. Antriebsstrang-Montagesystem gemäß einem der vorhergehenden Ansprüche, wobei das Antriebsstrang-Montagesystem ferner ein passives Magnetlager umfasst, welches dafür ausgelegt ist, den Antriebsstrang zumindest teilweise in einem oder in mehreren Freiheitsgraden zu lagern.

11. Antriebsstrang-Montagesystem gemäß 10, wobei das passive Magnetlager und das aktive Magnetlager bei der Lagerung des Antriebsstrangs in einem oder mehreren Freiheitsgraden zusammenwirken.

12. Fahrzeug, das mindestens ein Antriebsstrang-Montagesystem gemäß den Ansprüchen 1 bis 11 umfasst.

13. Verfahren zum Steuern eines Fahrzeug-Antriebsstrang-Montagesystems, wobei das Antriebsstrang-Montagesystem ein aktives Magnetlager umfasst, welches dafür ausgelegt ist, mindestens einen Teil des Antriebsstrangs im Verhältnis zu einem Fahrzeug zu lagern und eine Steuerung, die dafür ausgelegt ist, mindestens einen Betriebszustand des Antriebsstrangs oder des Fahrzeugs zu bestimmen, wobei das Verfahren umfasst:
den Betriebszustands des Antriebsstrangs und/oder des Fahrzeugs zu bestimmen; und
den Betrieb des aktiven Magnetlagers in Abhängigkeit vom Betriebszustand des Antriebsstrangs und/oder des Fahrzeugs anzupassen, wobei die Steifheit des aktiven Magnetlagers als Reaktion darauf erhöht wird, dass sich die Leistungsabgabe des Antriebsstrangs und/oder des manövrierenden Fahrzeugs erhöht.

## Revendications

1. Un système de montage de groupe motopropulseur (103) pour un groupe motopropulseur de véhicule, le système comprenant :
un palier magnétique actif configuré pour supporter au moins une partie du groupe motopropulseur par rapport à une partie de carrosserie d'un véhicule ; et
un contrôleur (115) configuré pour déterminer un état de fonctionnement d'au moins l'un du groupe motopropulseur et du véhicule et ajuster le fonctionnement du palier magnétique actif en fonction de l'état de fonctionnement d'au moins l'un du groupe motopropulseur et du véhicule, **caractérisé en ce que** le contrôleur est configuré pour augmenter la rigidité du palier magnétique actif en réponse à au moins l'une d'une augmentation de la puissance de sortie du groupe motopropulseur et le véhicule effectuant une manoeuvre.

2. Un système de montage de groupe motopropulseur selon la revendication 1, dans lequel le contrôleur est en outre configuré pour ajuster la rigidité du palier magnétique actif en réponse à au moins l'une de la charge dynamique du groupe motopropulseur et à une fréquence de fonctionnement du groupe motopropulseur.

3. Un système de montage de groupe motopropulseur selon la revendication 1 ou 2, dans lequel le contrôleur est en outre configuré pour maintenir la rigidité du palier magnétique actif sous chargement d'état stable du groupe motopropulseur.

4. Un système de montage de groupe motopropulseur selon l'une quelconque des revendications précédentes, dans lequel le contrôleur est en outre configuré pour diminuer la rigidité du palier magnétique actif en réponse à une diminution de la puissance de sortie du groupe motopropulseur.

5. Un système de montage de groupe motopropulseur selon l'une quelconque des revendications précédentes, le système de montage de groupe motopropulseur comprenant un premier support (105) pouvant être fixé à la partie de carrosserie du véhicule et un deuxième support (107) pouvant être fixé au groupe motopropulseur, dans lequel le palier magnétique actif est configuré pour supporter les premier et deuxième supports l'un par rapport à l'autre.

6. Un système de montage de groupe motopropulseur selon la revendication 5, dans lequel le palier magnétique actif est configuré pour maintenir un jeu de fonctionnement entre le premier support et le deuxième support lorsque le palier magnétique actif est mis sous tension.

7. Un système de montage de groupe motopropulseur selon la revendication 6, le système de montage de groupe motopropulseur comprenant un capteur (113) configuré pour déterminer la taille du jeu de fonctionnement.

8. Un système de montage de groupe motopropulseur selon la revendication 7, dans lequel le capteur est prévu à proximité d'un électroaimant du palier électromagnétique.

9. Un système de montage de groupe motopropulseur selon la revendication 7 ou 8, dans lequel le capteur fait partie intégrante d'au moins l'un du premier support, du deuxième support et du palier magnétique actif.

10. Un système de montage de groupe motopropulseur selon l'une quelconque des revendications précédentes, le système de montage de groupe motopropulseur comprenant en outre un palier magnétique passif configuré pour supporter au moins partiellement le groupe motopropulseur dans un ou plusieurs degrés de liberté.

11. Un système de montage de groupe motopropulseur selon la revendication 10, dans lequel le palier magnétique passif et le palier magnétique actif coopèrent pour supporter le groupe motopropulseur dans un ou plusieurs degrés de liberté.

12. Un véhicule comprenant au moins l'un du système de montage du groupe motopropulseur selon les revendications 1 à 11.

13. Un procédé de contrôle d'un système de montage de groupe motopropulseur pour un véhicule, le système de montage de groupe motopropulseur comprenant un palier magnétique actif configuré pour supporter au moins une partie du groupe motopropulseur par rapport au véhicule, et un contrôleur configuré pour déterminer un état de fonctionnement d'au moins l'un du groupe motopropulseur et du véhicule, le procédé comprenant :
la détermination de l'état de fonctionnement d'au moins l'un du groupe motopropulseur et du véhicule ; et
l'ajustement du fonctionnement du palier magnétique actif en fonction de l'état de fonctionnement d'au moins l'un du groupe motopropulseur et du véhicule, dans lequel la rigidité du palier magnétique actif est augmentée en réponse à au moins l'une d'une augmentation de la puissance de sortie du groupe motopropulseur et le véhicule effectuant une manoeuvre.
